# EUROPÄISCHE PATENTSCHRIFT

(11) **EP 4 107 096 B1**
(45) Veröffentlichungstag und Bekanntmachung des Hinweises auf die Patenterteilung: **22.05.2024**
(21) Anmeldenummer: 21704236.5
(22) Anmeldetag: 08.02.2021
(51) Int. Cl.: B65G 21/20

(54) **VORRICHTUNG UND VERFAHREN ZUR BEFÖRDERUNG VON BEHÄLTERN**
DEVICE AND METHOD FOR CONVEYING CONTAINERS
DISPOSITIF ET PROCÉDÉ POUR LE TRANSPORT DE CONTENEURS

(30) Priorität: 17.02.2020 DE 102020104091
(43) Veröffentlichungstag der Anmeldung: 28.12.2022
(73) Patentinhaber: KHS GmbH, 44143 Dortmund (DE)
(72) Erfinder: STENNER, Holger, 45721 Haltern am See (DE); FAHLDIECK, Andreas, 55743 Idar-Oberstein (DE)
(86) Internationale Anmeldenummer: PCT/EP2021/052916
(87) Internationale Veröffentlichungsnummer: WO 2021/165074

(56) Entgegenhaltungen:
- WO-A1-2010/142918
- US-A1- 2017 066 596

## Beschreibung

Die Erfindung betrifft eine Behälterführungseinrichtung mit einem Geländer mit zwei im Abstand voneinander angeordneten, sich in Transportrichtung einer Behältertransporteinrichtung erstreckenden Führungselementen zum Führen von Behältern oder Gebinden, wobei mindestens ein Führungselement quer zur Transportrichtung gegenüber dem anderen Führungselement mittels einer Verstelleinrichtung verstellbar ist, die einen um eine Rotationsachse verdrehbaren Antriebskörper und ein mit dem mindestens einen Führungselement verbundenes Kopplungselement aufweist, das derart mit dem Antriebskörper verbunden ist, dass eine Verdrehung des Antriebskörpers eine Verstellung des Kopplungselements quer zur Transportrichtung bewirkt.

In Behälterbehandlungsanlagen, bspw. in Abfüllanlagen zum Abfüllen eines flüssigen Mediums in Behälter wie Flaschen, Dosen oder dergleichen, werden die Behälter oft über lange Transportwege mittels einer Transporteinrichtung mit einer Behälterführungseinrichtung transportiert. Die einzelnen Behälter und/oder zu Gebinden zusammengefasste Behälter werden dabei mithilfe eines Geländers der Behälterführungseinrichtung durch die Behälterbehandlungsanlage geführt. Das Geländer weist dabei beidseitig an der Behältertransporteinrichtung vorgesehene Geländerelemente auf, deren Abstand sich in Abhängigkeit von der Breite der zwischen den Geländerelementen hindurchzuführenden Behälter oder Gebinde und/oder der Anzahl der gleichzeitig zwischen den Geländerelementen hindurchzuführenden Behälter oder Gebinde einstellen lässt.

Bekannte Behälterführungseinrichtungen, wie bspw. die aus der EP 3 063 081 B1 bekannte Behälterführungseinrichtung, weisen hierzu kompliziert ausgebildete Verstellmechanismen auf, welche einen hohen Platzbedarf aufweisen, um eine erforderliche Verstellung bereitzustellen. Zudem sind die bekannten Verstelleinrichtungen sehr teuer und aufwändig in der Wartung und Montage und benötigen zudem Mittel zur Festlegung der eingestellten Geländerpositionen, um eine ungewollte Veränderung des Abstands der Führungselemente während des Betriebs in Folge eines Zusammenwirkens mit den Behältern oder Gebinden zu verhindern.

Aus der WO 2010 / 142 918 A1 ist bereits eine Förderanlage mit mindestens einem gekrümmten Korridor bekannt, wobei in dem Korridor eine Reihe von Produkten läuft, die von einem beweglichen Endlosband bewegt werden. Der Korridor ist dabei zu einer Seite durch eine erste feste, mit einem Rahmen verbundene Wand mit einem festen Krümmungsradius und zu einer anderen Seite durch eine zweite, in Bezug auf den Rahmen bewegliche Wand begrenzt, wobei der Krümmungsradius der zweiten Wand in Abhängigkeit von den Produkten variiert werden kann. Diese Bewegung der zweiten Wand auf die erste Wand zu bzw. davon weg erfolgt mittels eines Mechanismus, der eine schwimmend gelagerte Mutter, die mittelbar über eine Halterung mit der zu bewegenden Wand verbunden ist und die mit einer rotierbaren, in der Verstellrichtung verlaufenden Gewindestange zusammenwirkt, wobei das zweite, nicht mit der schwimmend gelagerten Mutter zusammenwirkende Ende der Gewindestange rotierbar an einer Halterung der ersten, feststehenden Wand festgelegt ist, sodass eine Rotation der Gewindestange ein Verschieben der Mutter entlang der Mittellängsachse der Gewindestange und dadurch ein Einstellen der Korridorbreite bewirkt.

Die US 2017 / 066 596 A1 betrifft ein Führungsschienensystem, das derart einstellbar ist, dass durch Eingriff mit einem einzigen Mechanismus der Abstand zwischen einem Paar von beidseitig eines Förderers angeordneten Schienen über mehrere Fördersegmente verändert wird. Dazu umfasst das Führungsschienensystem eine Führungsschiene, die entlang der Förderfläche positioniert ist. Ein Führungsschienen-Stützsystem ist mit der Führungsschiene verbunden, wobei das Führungsschienen-Stützsystem eine Mehrzahl von Führungsschienen-Einstellanordnungen aufweist. Jede Führungsschienen-Einstellanordnung weist einen Führungsschienenarm auf, an dem die Führungsschiene angebracht ist. Der Führungsschienenarm weist eine Einstellzahnstange und ein Führungsschienenritzel auf, das mit der Einstellzahnstange in Eingriff steht und derart positioniert ist, dass eine Drehung des Führungsschienenritzels bewirkt, dass sich die Einstellzahnstange und folglich der Führungsschienenarm und wiederum die Führungsschiene linear in Richtung der Mitte der Förderfläche bzw. davon weg bewegen.

Der Erfindung liegt die Aufgabe zugrunde, eine Behälterführungseinrichtung der eingangs genannten Art bereitzustellen, welche sich kostengünstig herstellen lässt und einen einfachen sowie kompakten Aufbau aufweist.

Die Erfindung löst die Aufgabe durch eine Behälterführungseinrichtung mit den Merkmalen des Anspruchs 1. Vorteilhafte Weiterbildungen der erfindungsgemäßen Behälterführungseinrichtung sind in den abhängigen Ansprüchen 2 bis 11 angegeben.

Die Erfindung bezieht sich ferner auf eine Behältertransporteinrichtung mit mindestens einer erfindungsgemäßen Behälterführungseinrichtung gemäß Anspruch 12 sowie auf ein Verfahren zur Einstellung des Abstandes der Führungselemente eines Geländers unter Verwendung einer erfindungsgemäßen Behälterführungseinrichtung gemäß Anspruch 13.

Kennzeichnend für die erfindungsgemäße Behälterführungseinrichtung ist, dass der Antriebskörper ein mit dem Kopplungselement, welches mit dem Führungselement verbunden ist, in Eingriff befindliches Steuerelement aufweist, das zumindest abschnittsweise einen spiralförmigen Verlauf um die Rotationsachse des Antriebskörpers aufweist. Idealerweise ist der Antriebskörpers aus zwei scheibenartigen Hälften gebildet, zwischen denen das Kopplungselement aufgenommen ist, so dass dessen Führungsbolzen in den vorgenannten Steuerelementen verschieblich gelagert und geführt sind.

Bei der erfindungsgemäßen Behälterführungseinrichtung bewirkt eine Verstellung des Kopplungselements gegenüber der Verstelleinrichtung eine Verlagerung des mit dem Kopplungselement verbundenen Führungselements. Eine Verlagerung des Kopplungselements resultiert dabei aus einer Verdrehung des mit dem Kopplungselement verbundenen Antriebskörpers, wozu dieser ein Steuerelement aufweist, das einen sich zumindest abschnittsweise um die Rotationsachse erstreckenden, spiralförmigen Verlauf aufweist. D. h., das Steuerelement erstreckt sich entlang einer Kurve, die um die Rotationsachse verläuft, und sich in Abhängigkeit von der Betrachterperspektive von der Rotationsachse entfernt oder sich ihr annähert. Die Kurve, entlang welcher sich der spiralförmige Verlauf des Steuerelements erstreckt, erstreckt sich dabei erfindungsgemäß in einer Ebene senkrecht zur Rotationsachse. In bevorzugter Weise beschreibt das Steuerelement eine Kurve um die Rotationsachse mit einem Verlauf nach Art einer archimedischen Spirale, wobei sich der Radius der Kurve zur Rotationsachse in Abhängigkeit vom Drehwinkel des Antriebskörpers kontinuierlich, insbesondere proportional zum Drehwinkel verändert, d. h. vergrößert oder verkleinert.

Die erfindungsgemäße Verbindung des Steuerelements mit dem Kopplungselement hat demnach zum einen zur Folge, dass das Kopplungselement bei einer Verdrehung des Antriebskörpers seine Position in Umfangsrichtung des Antriebskörpers beibehält. Zum anderen resultiert aus einer Verdrehung des Antriebskörpers eine in axialer Richtung des Kopplungselements gerichtete Verlagerung des Kopplungselements, entsprechend dem spiralförmigen Verlauf des Steuerelements. In Abhängigkeit von der Drehrichtung des Antriebskörpers wird somit das Kopplungselement in Richtung auf die Rotationsachse oder in die entgegengesetzte Richtung verlagert, wodurch ein mit dem Kopplungselement verbundenes Führungselement linear gegenüber der ortsfest an einer Behältertransporteinrichtung angeordneten Verstelleinrichtung verstellbar ist. Durch eine entsprechende Anordnung der Verstelleinrichtung unter Berücksichtigung der Transportrichtung der Behältertransporteinrichtung lässt sich somit zumindest ein Führungselement des zwei Führungselemente umfassenden Geländers quer zur Transportrichtung verstellen, sodass mittels der erfindungsgemäßen Verstelleinrichtung die Geländerbreite einstellbar ist.

Im Sinne der Erfindung ist unter dem Ausdruck "Geländerbreite" (in Fachkreisen teilweise auch als Förderbreite bezeichnet) der Abstand zwischen einander gegenüberliegenden Geländerelementen zu verstehen.

Die erfindungsgemäße Ausgestaltung des Antriebskörpers mit einem sich spiralförmig um die Rotationsachse erstreckenden Steuerelement ermöglicht dabei eine besonders einfache und kompakte Bauweise der Verstelleinrichtung, wobei über die Ausgestaltung des grundsätzlich frei wählbaren spiralförmigen Verlaufs die lineare Verstellbarkeit in Abhängigkeit von der Verdrehung des Antriebskörpers beliebig festlegbar ist. Die Verstelleinrichtung der erfindungsgemäßen Behälterführungseinrichtung lässt sich dabei besonders kompakt und einfach ausgestalten und erlaubt es überdies, auf separate Elemente zur Festlegung der eingestellten Position der Führungselemente zu verzichten, nachdem das Kopplungselement im Wesentlichen senkrecht auf das spiralförmige Steuerelement wirkt und daher eine Selbsthemmung der eingestellten Position besteht.

Die Ausgestaltung des Steuerelements sowie dessen Anbindung an das Kopplungselement derart, dass eine Verdrehung des Antriebskörpers eine Verlagerung des mit dem Kopplungselement verbundenen Führungselements quer zur Transportrichtung der Behältertransporteinrichtung bewirkt, ist grundsätzlich frei wählbar. Nach einer besonders vorteilhaften Ausgestaltung der Erfindung ist jedoch vorgesehen, dass das Steuerelement als Steuernut ausgebildet ist, die zur verlagerbaren Aufnahme eines mit dem Kopplungselement verbundenen, vorzugsweise parallel zur Rotationsachse ausgerichteten Steuerbolzens vorgesehen ist.

Gemäß dieser Ausgestaltung der Erfindung weist der Antriebskörper eine in die Oberfläche eingebrachte Steuernut auf, welche sich spiralförmig um die Rotationsachse herum erstreckt. Zur Verbindung des Kopplungselements mit dem Antriebskörper derart, dass eine Verdrehung des Antriebskörpers eine Verlagerung des mit dem Kopplungselement verbundenen Führungselements bewirkt, weist das Kopplungselement einen Steuerbolzen auf, welcher verlagerbar innerhalb der Steuernut angeordnet ist. Aufgrund des spiralförmigen Verlaufs der Steuernut bewirkt somit eine Verdrehung des Antriebskörpers über den in der Steuernut angeordneten Steuerbolzen eine Verlagerung des Kopplungselements, wobei dessen Bewegungsrichtung von der Drehrichtung des Antriebskörpers und damit Verdrehung der spiralförmigen Steuernut um die Rotationsachse abhängig ist.

Die Verwendung einer Steuernut als Steuerelement zeichnet sich dabei dadurch aus, dass sie besonders einfach und kostengünstig an dem Antriebskörper ausgebildet werden kann. Zudem ermöglicht die Steuernut eine besonders einfache und unkomplizierte Kopplung des Kopplungselements mit der Steuernut über einen in der Steuernut angeordneten Steuerbolzen, der sowohl gelenkig als auch verdrehfest an dem Kopplungselement angeordnet sein kann. Die Behälterführungseinrichtung lässt sich somit besonders einfach und kostengünstig herstellen und weist eine hohe Zuverlässigkeit auf.

Die Ausgestaltung der Führung des Kopplungselements während dessen Verstellung ist ebenso wie die Anordnung des Antriebskörpers innerhalb der Verstelleinrichtung grundsätzlich frei wählbar. Nach einer besonders vorteilhaften Ausgestaltung der Erfindung ist jedoch vorgesehen, dass der Antriebskörper verdrehbar in einem Gehäuse der Verstelleinrichtung angeordnet ist, wobei das Gehäuse eine das Kopplungselement in Umfangsrichtung des Antriebskörpers festlegende Führungsöffnung aufweist.

Gemäß dieser Weiterbildung der Erfindung dient das Gehäuse zur verdrehbaren Aufnahme des Antriebskörpers, so dass dieser vor äußeren Einflüssen geschützt ist, wodurch eine hohe Betriebssicherheit der Behälterführungseinrichtung gewährleistet ist. Das Gehäuse weist ferner eine Führungsöffnung auf, innerhalb derer das Kopplungselement axial verschiebbar gelagert ist. Die Führungsöffnung legt somit das Kopplungselement in Umfangsrichtung des Antriebskörpers fest und bewirkt eine Umwandlung der Rotationsbewegung des Antriebskörpers in eine lineare Bewegung des Kopplungselements innerhalb der Führungsöffnung, wobei die Bewegungsrichtung des Kopplungselements abhängig von der Drehrichtung des Antriebskörpers ist.

Diese Ausgestaltung der Erfindung zeichnet sich durch einen besonders kompakten Aufbau sowie eine besonders einfache Umwandlung der Rotationsbewegung des Antriebskörpers in eine lineare Bewegung des Kopplungselements aus, welche in entsprechender Weise auf das mit dem Kopplungselement verbundene Führungselement übertragen wird. Die Bewegungsrichtung des Führungselements der Behälterführungseinrichtung gegenüber der Behältertransporteinrichtung lässt sich somit besonders einfach und zuverlässig festlegen.

Die Funktion der Behälterführungseinrichtung ist grundsätzlich bereits durch die Verwendung eines Antriebskörpers gewährleistet, welcher über das Steuerelement mit dem Kopplungselement in Eingriff befindlich ist. Nach einer besonders vorteilhaften Ausgestaltung der Erfindung ist jedoch vorgesehen, dass die Verstelleinrichtung zwei Antriebskörper mit entsprechenden, in Rotationsachsenrichtung gegenüberliegenden Steuernuten aufweist, die jeweils zur Aufnahme von gegenüberliegenden, über das Kopplungselement hinausragenden Abschnitten des mit dem Kopplungselement verbundenen Steuerbolzens ausgebildet sind.

Gemäß dieser Ausgestaltung der Erfindung weist die Verstelleinrichtung zwei Antriebskörper mit deckungsgleichen Steuernuten auf, sodass das Kopplungselement über einen sich in beide Steuernuten erstreckenden Steuerbolzen an beiden Antriebskörpern verstellbar gelagert ist. Diese Ausgestaltung der Erfindung gewährleistet in besonders zuverlässiger Weise eine entsprechend der Verstellung der Antriebskörper initiierte Verlagerung des mit dem Kopplungselement verbundenen Führungselements. Störungen aufgrund eines Auflösens der Verbindung zwischen dem Steuerbolzen und der Steuernut werden durch diese Ausgestaltung besonders zuverlässig vorgebeugt.

Eine Verstellung des Antriebskörpers, nämlich dessen Verdrehung um seine Rotationsachse kann grundsätzlich in beliebiger Weise, bspw. durch geeignete Getriebeelemente oder Kettenantriebe bewirkt werden. Nach einer besonders vorteilhaften Ausgestaltung der Erfindung ist jedoch vorgesehen, dass der Antriebskörper mit einer sich in Rotationsachsenrichtung erstreckenden Antriebswelle verdrehfest verbunden ist. Gemäß dieser Ausgestaltung der Erfindung erstreckt sich die Antriebswelle in Rotationsachsenrichtung durch den Antriebskörper, sodass eine Verdrehung der Antriebswelle eine Verdrehung des Antriebskörpers um seine Rotationsachse zufolge hat. In Abhängigkeit von der Drehrichtung der Antriebswelle kann somit in besonders einfacher und komfortabler Weise der Abstand der Führungselemente eingestellt werden.

Nach einer weiteren Ausgestaltung der Erfindung ist ferner vorgesehen, dass das Kopplungselement derart ausgebildet ist, insbesondere im Bereich des Antriebskörpers derart gebogen ist, dass es - bezogen auf die Rotationsachse - auf der dem Führungselement abgewandten Seite mit dem Antriebskörper in Eingriff befindlich ist.

Gemäß dieser Ausgestaltung der Erfindung weist das Führungselement keine geradlinige Form auf, sondern ist abschnittsweise gebogen, bspw. U-förmig ausgebildet, sodass es um die Rotationsachse herumgeführt werden kann, wodurch die Möglichkeit besteht, das Führungselement auf der dem Führungselement abgewandten Seite der Rotationsachse mit dem Antriebskörper in Eingriff zu bringen, bspw. über einen Steuerbolzen mit der Steuernut zu koppeln. Diese Ausgestaltung ermöglicht eine besonders stabile Verstellung und Festlegung der eingestellten Position der Führungselemente gegenüber der Verstelleinrichtung.

Nach einer Weiterbildung der Erfindung ist ferner vorgesehen, dass die Verstelleinrichtung zwei derart mit dem Antriebskörper in Eingriff befindliche Kopplungselemente aufweist, dass eine Verstellung des Antriebskörpers eine entgegengesetzte Verstellung der Kopplungselemente bewirkt. Gemäß dieser Ausgestaltung der Erfindung dient eine einzelne Verstelleinrichtung mit mindestens einem Antriebskörper dazu, zwei mit dem Antriebskörper verbundene Kopplungselemente zu verstellen. Bei einer - bezogen auf die Rotationsachse - gegenüberliegenden, d. h. diametralen Anordnung bspw. der Steuerbolzen in der Steuernut erfolgt somit aufgrund einer Verdrehung des Antriebskörpers eine entgegengesetzte Verstellung der Kopplungselemente, d.h. in Abhängigkeit von der Drehrichtung des Antriebskörpers werden die mit den Kopplungselementen verbundenen Führungselemente aufeinander zu oder voneinander weg bewegt.

Diese Ausgestaltung der Erfindung ermöglicht es somit, unter Verwendung einer einzelnen Verstelleinrichtung zwei Kopplungselemente und damit zwei mit den Kopplungselementen verbundene Führungselemente gegenüber einer mit der Behälterführungseinrichtung angeordneten Behältertransporteinrichtung zu verstellen, wobei die beiden Kopplungselemente bevorzugt - in Rotationsachsenrichtung des Antriebskörpers betrachtet - an dessen einander gegenüberliegenden Seiten angeordnet sind und über sich in entgegengesetzte Richtung - jeweils ausgehend von dem Kopplungselement - erstreckende Steuerbolzen mit der Steuernut verbunden sind.

Die Übertragung der Verstellbewegungen der Kopplungselemente auf die Führungselemente kann grundsätzlich in beliebiger Weise erfolgen. Nach einer besonders vorteilhaften Ausgestaltung der Erfindung ist jedoch vorgesehen, dass die bevorzugt vorgesehenen beiden, mit nur einem Antriebskörper in Eingriff befindlichen Kopplungselemente jeweils mit einem Bügel verbunden sind, die wiederum jeweils mit einem der einander gegenüberliegend angeordneten Führungselemente verbunden sind. Gemäß dieser Ausführungsform der Erfindung sind die Bügel sowohl mit den Kopplungselementen als auch mit den Führungselementen verbunden. Über die Ausgestaltung der Bügel lässt sich somit eine komfortable Anordnung der Verstelleinrichtungen gegenüber dem Geländer der Behältertransporteinrichtung realisieren. So besteht beispielsweise die Möglichkeit, die Bügel derart auszubilden, dass die Verstelleinrichtungen bauraumsparend unterhalb einer Transportebene angeordnet werden können. Insbesondere ermöglicht somit die Verwendung der Bügel eine einfache Anbindung der Führungselemente an nur eine Verstelleinrichtung zur Verlagerung beider Führungselemente.

Die Anordnung der Behälterführungseinrichtung an einer Behältertransporteinrichtung kann dabei grundsätzlich in beliebiger Weise erfolgen. Nach einer besonders vorteilhaften Ausgestaltung ist jedoch vorgesehen, dass das Gehäuse einer Verstelleinrichtung ein Halteelement zur Festlegung der Verstelleinrichtung an der Behältertransporteinrichtung aufweist. Diese Ausgestaltung der Erfindung ermöglicht eine besonders einfache und unkomplizierte Montage der Behälterführungseinrichtung an einer Behältertransporteinrichtung. Die Behälterführungseinrichtung gemäß dieser Weiterbildung der Erfindung lässt sich somit auch als Nachrüstteil an bestehenden Behältertransporteinrichtungen in einfacher und unkomplizierter Weise anordnen, wobei hierzu das Halteelement mit entsprechenden Halteabschnitten versehen werden kann.

Zur Einstellung der sich durch den Abstand der Führungselemente ergebenden Geländerbreite reicht bereits die Verwendung einer Verstelleinrichtung zur Verstellung eines der beiden Führungselemente des Geländers gegenüber dem ortsfest angeordneten Führungselement. Nach einer besonders vorteilhaften Ausgestaltung der Erfindung ist jedoch vorgesehen, dass beide Führungselemente des Geländers mittels jeweils einer Verstelleinrichtung quer zur Transportrichtung verlagerbar sind, wobei die Verstelleinrichtungen jeweils einen Antriebskörper aufweisen, die ein sich spiralförmig um die Rotationsachse des Antriebskörpers erstreckendes, mit dem Kopplungselement in Eingriff befindliches Steuerelement aufweisen.

Gemäß dieser Ausgestaltung der Erfindung weist die Behälterführungseinrichtung zwei Verstelleinrichtungen auf, welche jeweils mit einem Führungselement des Geländers verbunden sind, sodass beide Führungselemente des Geländers relativ zueinander verstellbar sind. Diese Ausgestaltung der Erfindung ermöglicht somit eine besonders exakte und komfortable Einstellung der Geländerbreite, wobei durch die Verwendung von zwei Verstelleinrichtungen, insbesondere besonders schmale und breite Geländerbreiten einstellbar sind.

Der Antrieb der Antriebskörper kann grundsätzlich in beliebiger Weise, bspw. auch durch eine manuelle Verstellung der Antriebskörper, bspw. bewirkt durch ein Bedienpersonal, erfolgen. Nach einer besonders vorteilhaften Ausgestaltung der Erfindung ist jedoch vorgesehen, dass die vorteilhafterweise vorgesehene Antriebswelle motorisch angetrieben ist. Die Verwendung einer motorisch angetriebenen Antriebswelle ermöglicht es, die Positionierung zumindest eines Führungselements gegenüber dem anderen Führungselement besonders exakt vorzunehmen, sodass eine genaue Einstellung der Geländerbreite erfolgen kann. Über die Verwendung einer motorisch angetriebenen Antriebswelle kann zudem über eine Selbsthemmung des motorischen Antriebs eine besonders zuverlässige Lagesicherung des eingestellten Führungselements erreicht werden, sodass auf ergänzende Lagesicherungsmaßnahmen verzichtet werden kann.

Nach einer Weiterbildung der Erfindung ist vorgesehen, dass die Behälterführungseinrichtung mehrere in Transportrichtung benachbart zueinander angeordnete Verstelleinrichtungen aufweist, die über eine gemeinsame Antriebswelle miteinander verbunden sind. Gemäß dieser Ausgestaltung der Erfindung weist die Behälterführungseinrichtung mehrere in Transportrichtung im Abstand voneinander angeordnete, Verstelleinrichtungen auf, welche jeweils mit einem Abschnitt des Führungselements verbunden sind. Die Verwendung mehrerer Verstelleinrichtungen ermöglicht es, über besonders lange Strecken ein stabiles Geländer bereitzustellen, dessen Geländerbreite über die Verstelleinrichtung einstellbar ist.

Die Verstellung über eine gemeinsame Antriebswelle gewährleistet in besonders zuverlässiger Weise eine übereinstimmende Verstellung des Antriebskörpers und somit der mit dem Führungselement verbundenen Kopplungselemente, sodass abweichende Positionierungen des Führungselements in Transportrichtung betrachtet wirksam ausgeschlossen werden können. Im Falle einer sich entlang eines Bogens erstreckenden Transportrichtung kann die Antriebswelle dabei über zwischen den Verstelleinrichtungen angeordnete Kardangelenke verbunden werden, sodass auch Kurvenabschnitte der Behältertransporteinrichtung mit einem entsprechenden Geländer versehen werden können.

Der Verlauf der Behälterführungseinrichtung richtet sich nach der Anordnung der den Behältern zugeordneten Bearbeitungsstationen zueinander, welche über die Behälterführungseinrichtung miteinander verbunden sind. Gemäß einer vorteilhaften Weiterbildung der Erfindung weisen die Führungselemente einen in Transportrichtung zumindest abschnittsweise bogenförmigen Verlauf auf, wobei
- eine Verstelleinrichtung mit einem in Transportrichtung ortsfest mit einem der Führungselemente verbundenen Kopplungselement und
- mindestens eine weitere Verstelleinrichtung mit einer in Transportrichtung verstellbar mit demselben Führungselement verbundenen Kopplungselement vorgesehen ist.

Gemäß dieser Ausgestaltung der Erfindung weist die Behälterführungseinrichtung zur Einstellung der Geländerbreite in einem bogenförmigen Abschnitt mindestens zwei in Transportrichtung hintereinander angeordnete Verstelleinrichtungen auf, von denen jedoch nur eine eine in Transportrichtung der Behälter ortsfeste Verbindung des Kopplungselements mit dem Führungselement aufweist.

Neben dieser ortsfest mit dem Führungselement verbundenen Verstelleinrichtung weist die Behälterführungseinrichtung in dem bogenförmigen Abschnitt ferner mindestens eine weitere Verstelleinrichtung auf, bei der das Kopplungselement in Transportrichtung verstellbar, insbesondere gleitend mit dem Führungselement verbunden ist. Die verstellbare Verbindung der Kopplungselemente dieser zweiten und/oder jeder weiteren Verstelleinrichtung mit den Führungselementen im Bereich des bogenförmigen Abschnitts erlaubt es, auf besondere Maßnahmen zum Längenausgleich aufgrund einer Veränderung der Bogenlänge des bogenförmigen Abschnitts bei einer Verstellung der Führungselemente zu verzichten.

Zur ortsfesten Befestigung der Kopplungselemente an den Führungselementen können bspw. Klemmbacken verwendet werden. Eine in Transportrichtung verstellbare Verbindung der Kopplungselemente mit den Führungselementen kann über geeignete Gleitkörper realisiert werden, welche mit den Führungselementen entsprechend verbunden sind, so dass diese eine gleitende Verschiebung in Transportrichtung ermöglichen.

Zur Bildung des Geländers sind die Führungselemente nach einer weiteren Ausgestaltung der Erfindung zur lösbaren Aufnahme von Geländerelementen ausgebildet. Die Verwendung von an den Führungselementen anordenbaren Geländerelementen ermöglicht es, die Geländerelemente entsprechend der zu führenden Behältnisse auszuwählen und im Bedarfsfall auszutauschen. Auch können beschädigte Geländerelemente im Falle von Störungen besonders einfach ersetzt werden, wobei diese von den Führungselementen getrennt und durch neue oder instandgesetzte Geländerelemente ersetzt werden.

Besonders vorteilhafterweise ist dabei vorgesehen, dass die Geländerelemente in Transportrichtung teleskopierbar ausgebildet sind. Die Verwendung von teleskopierbaren Geländerelementen eignet sich insbesondere zur Anordnung im Bereich eines bogenförmigen Verlaufs der Behälterführungseinrichtungen, wobei Längenänderungen des bogenförmigen Abschnitts aufgrund einer Verstellung der Führungselemente über die Teleskopierbarkeit der Geländerelemente zuverlässig ausgeglichen werden, so dass eine durchgehende Führung für die zu transportierenden Behälter gebildet wird.

Das erfindungsgemäße Verfahren zur Einstellung des Abstands der Führungselemente umfasst folgenden Schritte:
- Verdrehung des Antriebskörpers zur Verlagerung mindestens eines Führungselements des Geländers gegenüber dessen anderen Führungselement quer zur Transportrichtung und
- Beendigung der Verdrehung nach Erreichen des einzustellenden Abstandes zur Festlegung der Führungselemente zueinander.

Das erfindungsgemäße Verfahren ermöglicht es unter Verwendung der vorstehend dargestellten Behälterführungseinrichtung durch eine einfache Verdrehung des Antriebskörpers die Geländerbreite einzustellen und nach Erreichen der einzustellenden Geländerbreite über eine Beendigung der Verdrehung die einzustellende Position festzulegen.

Ausführungsbeispiele der Erfindung werden nachstehend mit Bezug auf die Zeichnungen erläutert. Es zeigen:
- Fig. 1: in einer perspektivischen Ansicht einen Teilbereich einer ersten Ausführungsform einer Behälterführungsvorrichtung;
- Fig. 2a: in einer perspektivischen Ansicht einen Teilbereich einer zweiten Ausführungsform einer Behälterführungseinrichtung;
- Fig. 2b: eine weitere perspektivische Ansicht der Behälterführungseinrichtung von Fig. 2a;
- Fig. 3a: eine perspektivische Ansicht einer Verstelleinrichtung der Behälterführungseinrichtung von Fig. 1 einer ersten Endposition;
- Fig. 3b: eine perspektivische Ansicht der Verstelleinrichtung von Fig. 3a in einer Zwischenposition und
- Fig. 3c: eine weitere perspektivische Ansicht der Verstelleinrichtung von Fig. 3a in einer zweiten Endposition;
- Fig. 4a: eine perspektivische Ansicht einer dritten Ausführungsform der Verstelleinrichtung in einer ersten Geländerposition;
- Fig. 4b: eine perspektivische Ansicht der Verstelleinrichtung von Fig. 4a in einer zweiten Geländerposition;
- Fig. 4c: eine perspektivische Ansicht der Verstelleinrichtung von Fig. 4a in einer dritten Geländerposition;
- Fig. 5: eine perspektivische Ansicht einer vierten Ausführungsform der Verstelleinrichtung und

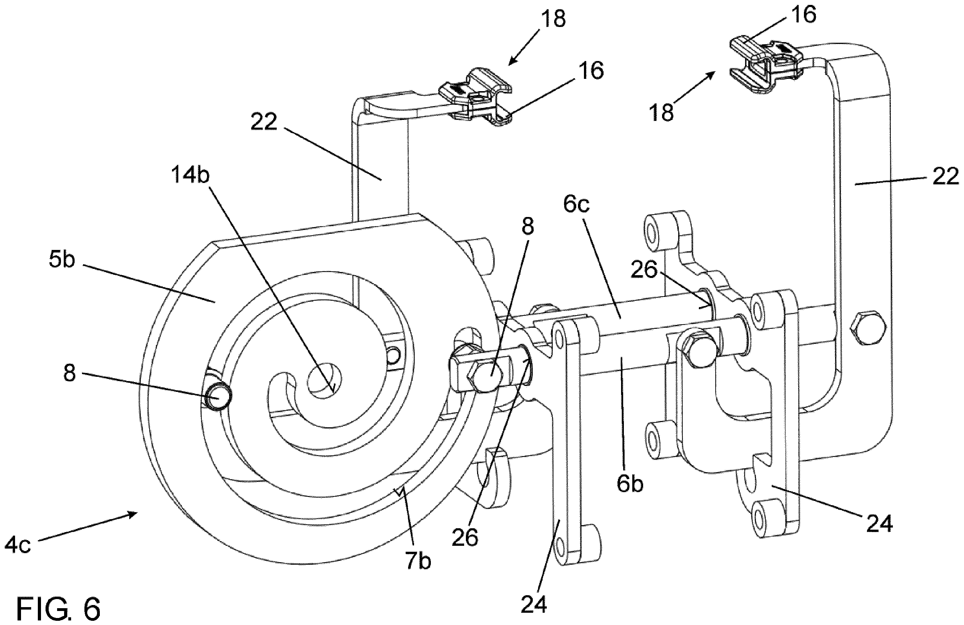

- Fig. 6: eine weitere perspektivische Ansicht der Verstelleinrichtung von Fig. 5.

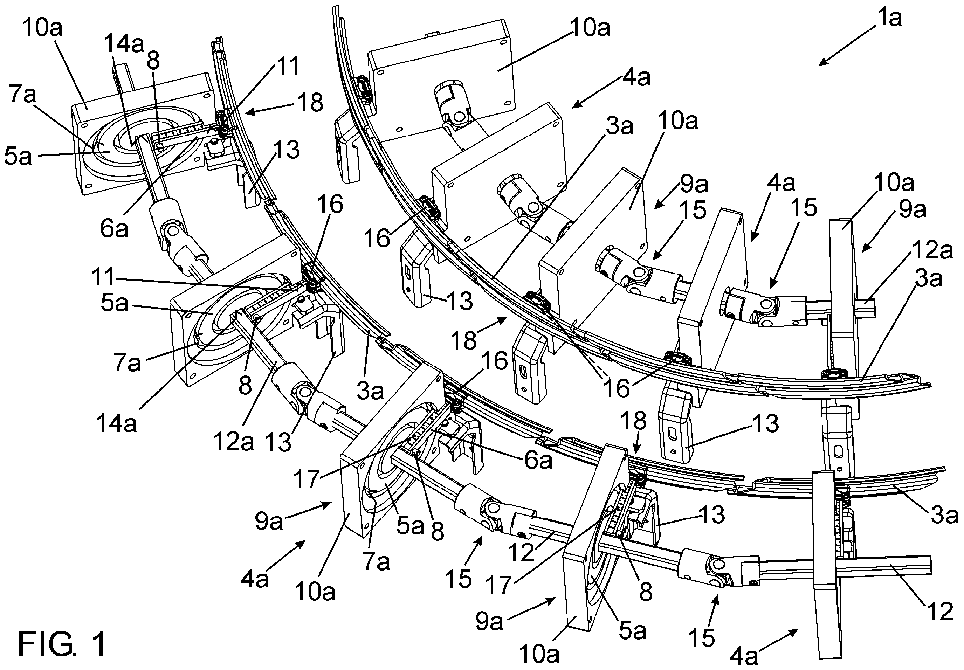

Figur 1 zeigt in einer perspektivischen Ansicht eine erste Ausführungsform eines Abschnitts einer Behälterführungseinrichtung 1a, welche zur Anordnung an einer hier nicht dargestellten Behältertransporteinrichtung geeignet ist, welche bspw. mittels eines Transportbandes Behälter, wie Flaschen oder Gebinde von Behältern entlang einer hier ebenfalls nicht dargestellten Behälterbehandlungsanlage transportiert.

Die Behälterführungseinrichtung 1a weist im Abstand voneinander angeordnete, bogenförmige Führungselemente 3a auf, die zur Aufnahme eines bogenförmigen Geländers 2 ausgebildet sind. Die Geländerbreite hängt dabei vom Abstand der einander gegenüberliegenden Führungselemente 3a ab. Zur Einstellung des Abstandes der Führungselemente 3a weist dabei die Behälterführungseinrichtung 1a mehrere Verstelleinrichtungen 4a auf, die benachbart zueinander entlang der Transportrichtung angeordnet sind und mittels derer die einander gegenüberliegenden Führungselemente 3a quer zur Transportrichtung verlagerbar sind.

Zur Einstellung der Position der Führungselemente 3a weisen die Verstelleinrichtungen 4a jeweils einen drehbar innerhalb einer Gehäusehälfte 10a eines Gehäuses 9a angeordneten Antriebskörper 5a auf, welcher ein sich spiralförmig um die Rotationsachse herum erstreckendes Steuerelement aufweist, das als Steuernut 7a ausgebildet ist. Die Steuernut 7a dient zur Aufnahme eines sich parallel zur Rotationsachse durch ein Kopplungselement 6a erstreckenden Steuerbolzens 8, welcher innerhalb der spiralförmigen Steuernut 7a verlagerbar ist. Das Kopplungselement 6a erstreckt sich seinerseits durch eine Führungsöffnung 11 der Gehäusehälfte 10a und ist mit seinem dem Steuerbolzen 8 abgewandten Ende über ein Anschlusselement 18 mit einem Abschnitt des Führungselements 3a verbunden.

Eine Verdrehung des Antriebskörpers 5a innerhalb der Gehäusehälfte 10a bewirkt somit in Abhängigkeit von der Drehrichtung eine axiale Verlagerung des Kopplungselements 6a innerhalb der Führungsöffnung 11, wodurch - in Abhängigkeit von der Drehrichtung des Antriebskörpers 5a - das Führungselement 3a in Richtung auf das gegenüberliegende Führungselement 3a oder entgegengesetzt zu diesem verstellt wird. In analoger Weise erfolgt eine Verstellung des gegenüberliegenden Führungselements 3a eines Geländers 2, sodass über eine Betätigung der Verstelleinrichtungen 4a der gegenüberliegenden Führungselemente 3a eine Einstellung der Breite des Geländers 2 bewirkt werden kann.

Zur Verdrehung der Antriebskörper 5a der benachbart zueinander angeordneten Verstelleinrichtungen 4a erstreckt sich eine Antriebswelle 12a durch Wellenaufnahmen 14a der Antriebskörper 5a der benachbart zueinander angeordneten Verstelleinrichtungen 4a. Zwischen den Verstelleinrichtungen 4a angeordnete Kardangelenke 15 gewährleisten dabei eine Übertragung der Drehbewegungen der einzelnen, abgewinkelt zueinander verlaufenden Segmente der Antriebswelle 12a.

Zur definierten Einstellung der Geländerbreite weisen die Kopplungselemente 6a eine Skala 17 auf, welche es dem Bedienpersonal ermöglicht, eine vorbestimmte Einstellung der Führungselemente 3a, welche zwischen Klemmbacken 16 des Anschlusselements 18 festgelegt sind, in exakter Weise gegenüber dem Gehäuse 9a vorzunehmen.

Zur Anordnung der Behälterführungseinrichtung 1a bzw. der einzelnen Verstelleinrichtungen 4a der Behälterführungseinrichtung 1a weisen die Verstelleinrichtungen 4a jeweils ein als Träger 13 ausgebildetes Halteelement auf, welches es ermöglicht, die Verstelleinrichtungen 4a an gewünschter Stelle an der Behältertransporteinrichtung zu positionieren.

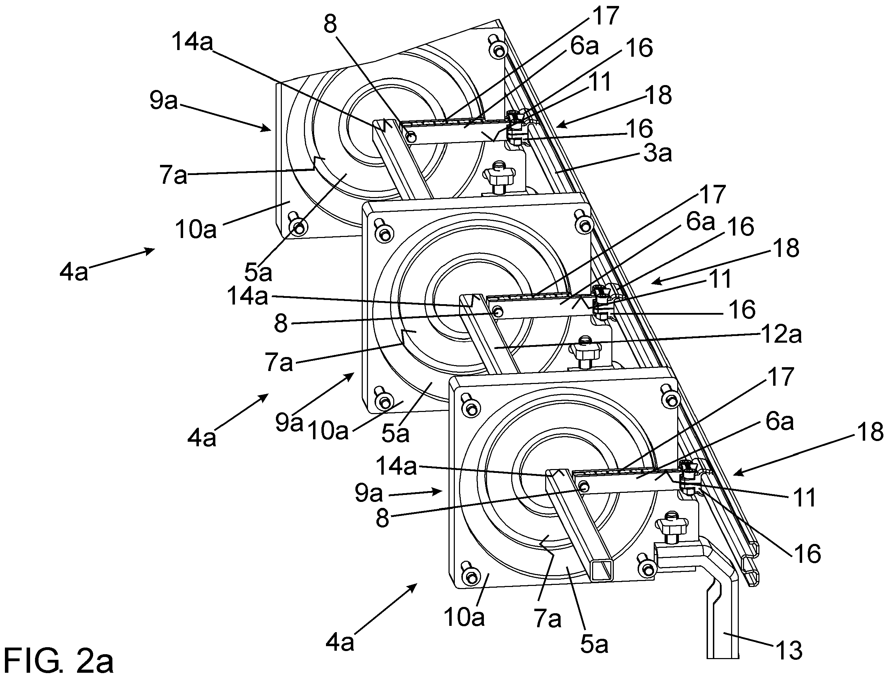

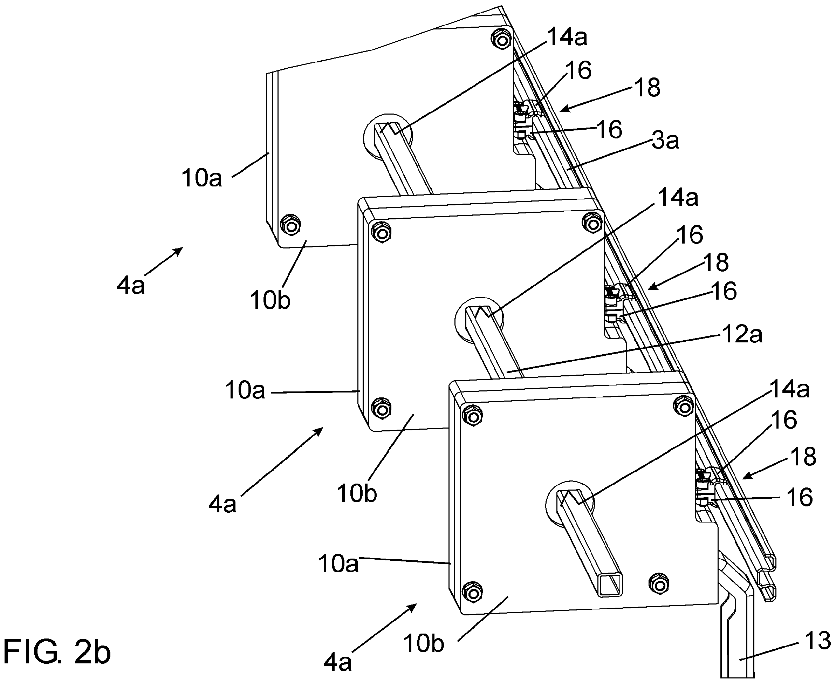

In den Figuren 2a und 2b ist ein Teilbereich einer Behältertransporteinheit dargestellt, bei der das Führungselement 3a abweichend zu dem in Figur 1 dargestellten Ausführungsbeispiel einen geradlinigen Verlauf aufweist. Die Gehäuse 9a sind in geöffnetem Zustand dargestellt, so dass eine Hälfte des Antriebskörpers 5a mit der spiralförmigen Steuernut 7a zu erkennen ist. Im komplettierten Zustand des gesamten Antriebskörpers 5a wird dieser aus zwei sich gegenüber liegenden, scheibenartigen Hälften gebildet, zwischen denen das Kopplungselement 6a angeordnet ist. Abweichend von dem in Figur 1 dargestellten Ausführungsbeispiel weist die Antriebswelle 12a folglich eine einstückige Ausgestaltung auf und erstreckt sich in zuvor dargestellter Weise durch die Wellenaufnahmen 14a der Antriebskörper 5a der einzelnen Verstelleinrichtungen 4a, wobei eine im Querschnitt quadratische Ausgestaltung der Antriebswelle 12a eine zuverlässige Übertragung der Drehbewegung der Antriebswelle 12a auf die Antriebskörper 5a gewährleistet.

In Figur 2b sind die in Figur 2a dargestellten Verstelleinrichtungen 4a mit einem geschlossenen Gehäuse 9a dargestellt, wobei das Gehäuse 9a der Verstelleinrichtung 4a aus einer ersten Gehäusehälfte 10a und einer zweiten Gehäusehälfte 10b gebildet ist. Die zweite Gehäusehälfte 10b weist dabei analog zu der Gehäusehälfte 10a einen Antriebskörper 5a auf, welcher dem Antriebskörper 5a in der Gehäusehälfte 10a entspricht. Der Steuerbolzen 8 des Kopplungselements 6a ist somit im geschlossenen Zustand des Gehäuses 9a in den Steuernuten 7a der beiden in dem Gehäuse 9a angeordneten Antriebskörper 5a geführt.

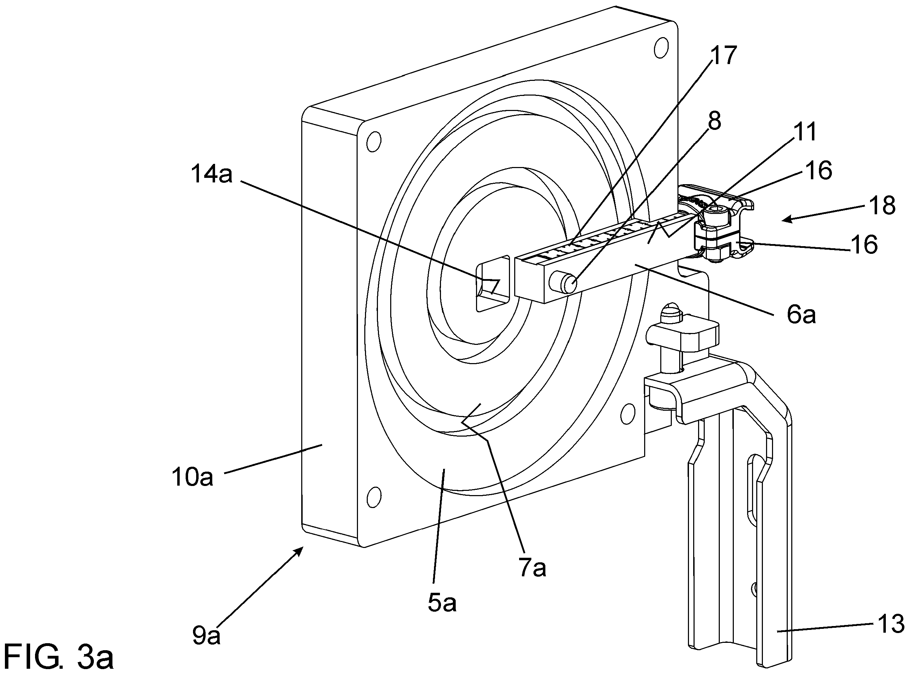

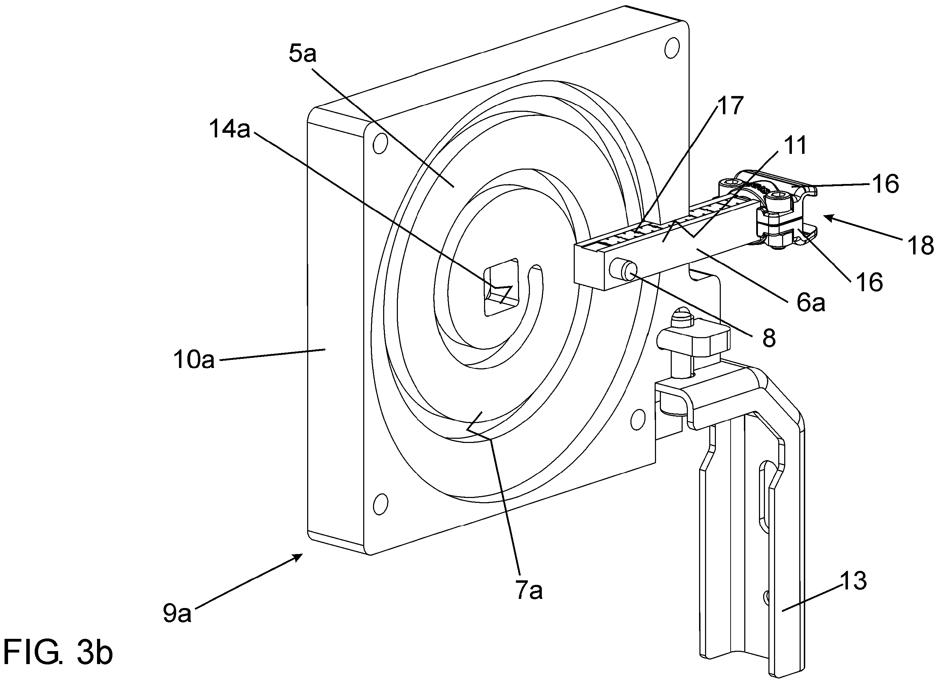

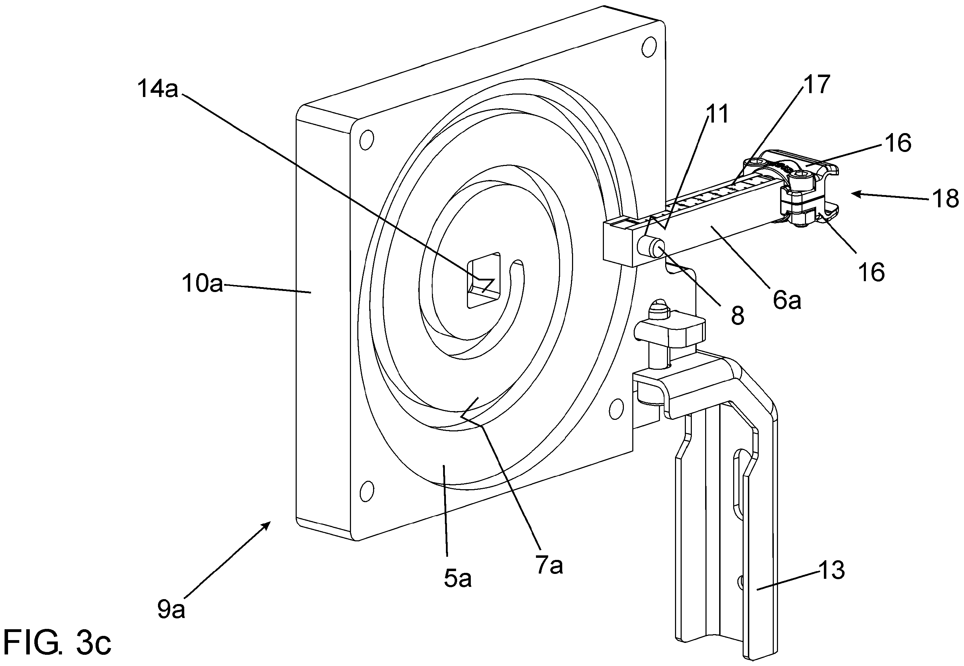

Die Funktionsweise der Verstelleinrichtungen 4a ist in den Figuren 3a bis 3c ergänzend dargestellt, wobei in Figur 3a das Kopplungselement 6a in einer ersten Endposition, in Figur 3b das Kopplungselement 6a in einer Zwischenposition und in Figur 3c das Kopplungselement 6a in einer zweiten Endposition gegenüber der Verstelleinrichtung 4a angeordnet ist. In der ersten Endposition befindet sich der Steuerbolzen 8 in dem der Rotationsachse nächsten Position innerhalb der Steuernut 7a. In der in Figur 3b dargestellten Zwischenposition befindet sich der Steuerbolzen 8 in einem Bereich der Steuernut 7a zwischen der ersten Endposition und der zweiten Endposition. In Figur 3c befindet sich der Steuerbolzen 8 in dem der Rotationsachse fernsten Punkt der Steuernut 7a.

Mögliche auf das Kopplungselement 6a in dessen Längsrichtung wirkende Kräfte infolge einer Belastung durch geführte Gebinde oder Behälter führen aufgrund ihrer senkrechten Ausrichtung zu der Steuernut 7a zu keiner Verstellung der mit dem Kopplungselement 6a verbundenen Führungselemente 3a, sodass eine Selbsthemmung der über die Antriebskörper 5a eingestellten Position der Führungselemente 3a vorliegt.

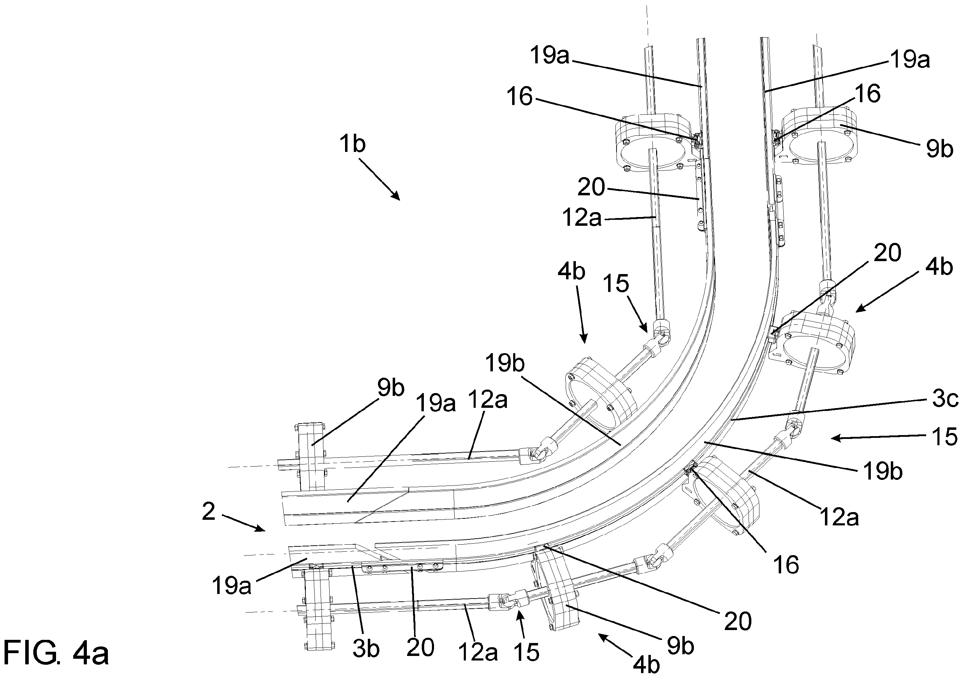

In den Figuren 4a bis 4c ist eine dritte Ausführungsform einer Behälterführungseinrichtung 1b in unterschiedlichen Positionen der die Geländerbreite bestimmenden, lösbar an den Führungselementen 3b,3c angeordneten Geländerelemente 19a, 19b dargestellt.

In einem bogenförmigen Bereich der Behälterführungseinrichtung 1b sind außenseitig an der Behälterführungseinrichtung 1b drei Verstelleinrichtungen 4b mit dem bogenförmigen Führungselement 3c verbunden. Dabei ist allein die mittlere Verstelleinrichtung 4b im mittleren Abschnitt des bogenförmigen Verlaufs in Transportrichtung ortsfest über ein Anschlusselement bildende Klemmbacken 16 mit dem Führungselement 3c verbunden. Die benachbart zu dieser Verstelleinrichtung 4b im bogenförmigen Abschnitt mit dem Führungselement 3c verbundenen Verstelleinrichtungen 4b sind hingegen über Verbindungselemente 20 mit dem Führungselement 3c gekoppelt, die in Transportrichtung entlang des Führungselements 3c gleitend verschiebbar sind.

Beiderseits in Transportrichtung an den bogenförmigen Abschnitt der Behälterführungseinrichtung 1b angrenzend sind die bogenförmigen Führungselemente 3c über Verbindungselemente 20 mit den sich gradlinig erstreckenden Führungselementen 3b verbunden, die einen Längenausgleich ermöglichen.

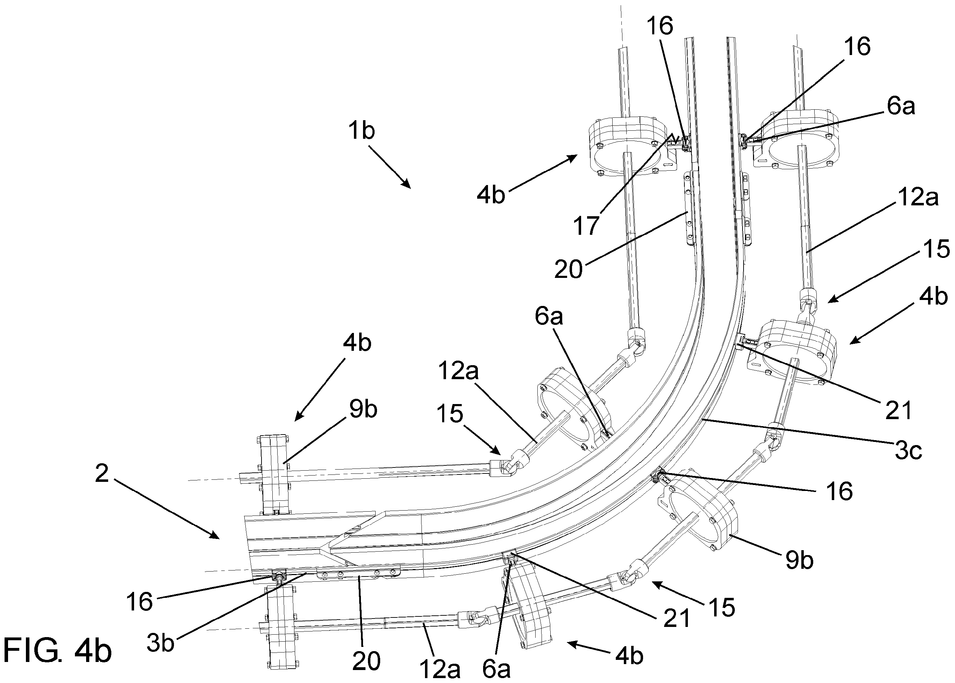

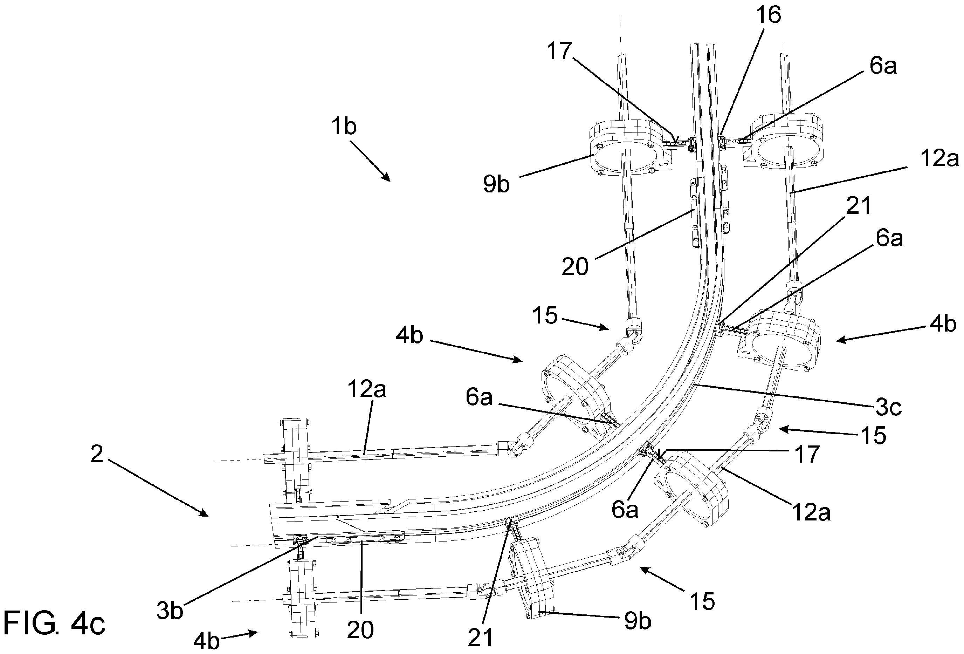

Über eine Verdrehung der in dem Gehäuse 9b angeordneten Antriebskörper 5a erfolgt eine Verlagerung der mit den Führungselementen 3b,3c verbundenen Geländerelemente 19a, 19b zwischen der in Fig. 4a dargestellten Position, in der die Behälterführungseinrichtung 1b den größten Abstand zwischen den Geländerelementen 19a, 19b aufweist und der in Fig. 4c dargestellten Position der Geländerelemente 19a, 19b, in der diese den geringsten Abstand voneinander aufweisen. In Fig. 4b ist eine Zwischenposition zwischen den in Fig. 4a und 4c dargestellten Endposition dargestellt.

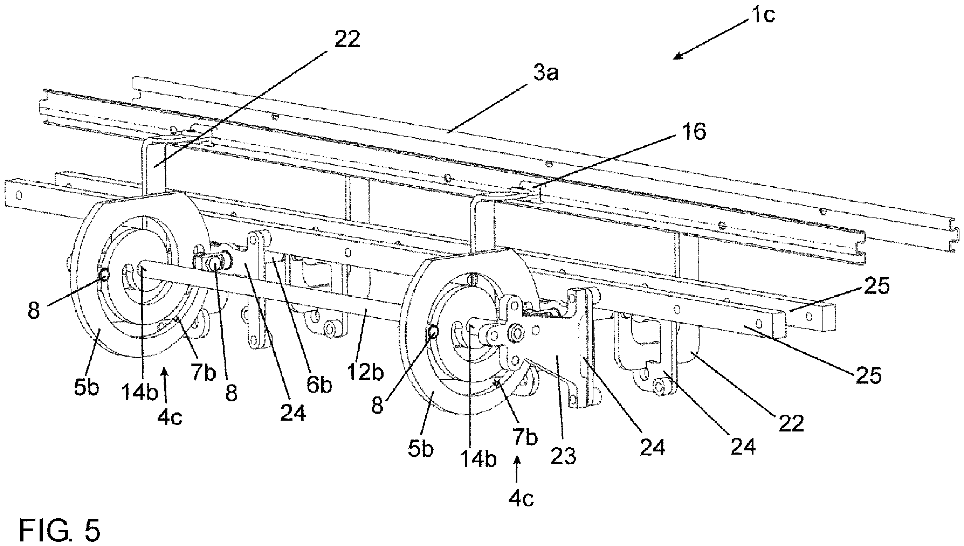

In Figur 5 ist in einer perspektivischen Darstellung eine weitere Ausführungsform eines Abschnitts einer Behälterführungseinrichtung 1c dargestellt. Bei dieser Ausgestaltung der Behälterführungseinrichtung 1c dient ein einziger Antriebskörper 5b einer Verstelleinrichtung 4c zur Verstellung des Abstands der beiden Führungselemente 3a. Die Verstelleinrichtung 4c weist hierzu zwei - in Transportrichtung betrachtet -, von gegenüberliegenden Seiten mit der Steuernut 7b über Steuerbolzen 8 in Wirkverbindung befindliche Kopplungselemente 6b, 6c auf, wobei die beiden Steuerbolzen 8 senkrecht zur Transportrichtung betrachtet diametral an dem Antriebskörper 5b angeordnet mit der Steuernut 7b in Eingriff befindlich sind. Der den Führungselementen 3a zugewandt an dem Antriebskörper 5b angeordnete Steuerbolzen 8 ist mit einem Kopplungselement 6b verbunden, welches sich längsverschiebbar durch Führungsöffnungen 26 an zwei Halterungen 24 erstreckt, welche im Abstand voneinander mit jeweils einer Grundschiene 25 verbunden sind. Der im größeren Abstand zu den Führungselementen 3a angeordnete Steuerbolzen 8 ist mit dem Kopplungselement 6c verbunden, welches sich ebenfalls längsverschieblich durch Führungsöffnungen 26 an den Halterungen 24 erstreckt.

Eine Verdrehung der Antriebskörper 5b über eine sich durch Wellenaufnahmen 14b erstreckende Antriebswelle 12b, welche drehbar an mit den Halterungen 24 verbundenen Trägern 23 angeordnet ist, bewirkt eine Längsverstellung der Kopplungselemente 6b, 6c, wobei in Abhängigkeit von der Drehrichtung des Antriebskörpers 5b die Anschlusselemente 18 aufeinander zu bzw. voneinander weg bewegt werden, wobei die Anschlusselemente 18 jeweils über einen Bügel 22 mit den Kopplungselementen 6b,6c verbunden sind.

### Bezugszeichenliste

- 1a, 1b, 1c: Behälterführungseinrichtung
- 2: Geländer
- 3a, 3b, 3c: Führungselement
- 4a, 4b, 4c: Verstelleinrichtung
- 5a,5b: Antriebskörper
- 6a, 6b, 6c: Kopplungselement
- 7a, 7b: Steuerelement/Steuernut
- 8: Steuerbolzen
- 9a, 9b: Gehäuse
- 10a, 10b: Gehäusehälfte
- 11: Führungsöffnung
- 12a, 12b: Antriebswelle
- 13: Halteelement/Träger
- 14a, 14b: Wellenaufnahme
- 15: Kardangelenk
- 16: Klemmbacke
- 17: Skala
- 18: Anschlusselement
- 19a, 19b: Geländerelement
- 20: Verbindungselement
- 21: Führungskörper
- 22: Bügel
- 23: Träger
- 24: Halterung
- 25: Grundschiene
- 26: Führungsöffnungen

## Patentansprüche

1. Behälterführungseinrichtung (1a, 1b, 1c) mit einem Geländer (2) mit zwei im Abstand voneinander angeordneten, sich in Transportrichtung einer Behältertransporteinrichtung erstreckenden Führungselementen (3a, 3b, 3c) zum Führen von Behältern oder Gebinden, wobei mindestens ein Führungselement (3a, 3b, 3c) quer zur Transportrichtung gegenüber dem anderen Führungselement (3a, 3b, 3c) mittels einer Verstelleinrichtung (4a, 4b, 4c) verstellbar ist, die einen um eine Rotationsachse verdrehbaren, ein- oder mehrteiligen Antriebskörper (5a, 5b) und ein mit dem mindestens einen Führungselement (3a, 3b, 3c) verbundenes Kopplungselement (6a, 6b, 6c) aufweist, das derart mit dem Antriebskörper (5a, 5b) verbunden ist, dass eine Verdrehung des Antriebskörpers (5a, 5b) eine Verstellung des Kopplungselements (6a, 6b, 6c) quer zur Transportrichtung bewirkt, **dadurch gekennzeichnet, dass**
der ein- oder mehrteilige Antriebskörper (5a, 5b) ein mit dem Kopplungselement (6a, 6b, 6c) in Eingriff befindliches Steuerelement (7a, 7b) aufweist, das zumindest abschnittsweise einen spiralförmigen Verlauf um die Rotationsachse des Antriebskörpers (5a, 5b) aufweist, wobei
sich der spiralförmige Verlauf des Steuerelements (7a, 7b) in einer Ebene senkrecht zur Rotationsachse erstreckt.

2. Behälterführungseinrichtung (1a, 1b, 1c) nach Anspruch 1,
**dadurch gekennzeichnet, dass** das Steuerelement als Steuernut (7a, 7b) ausgebildet ist, die zur verlagerbaren Aufnahme eines mit dem Kopplungselement (6a, 6b, 6c) verbundenen Steuerbolzens (8) vorgesehen ist.

3. Behälterführungseinrichtung (1a, 1b, 1c) nach Anspruch 1 oder 2,
**dadurch gekennzeichnet, dass** der Antriebskörper (5a, 5b) verdrehbar in einem Gehäuse (9a, 9b) der Verstelleinrichtung (4a, 4b, 4c) angeordnet ist, das eine das Kopplungselement (6a, 6b, 6c) in Umfangsrichtung des Antriebskörpers (5a, 5b) festlegende Führungsöffnung (11) aufweist.

4. Behälterführungseinrichtung (1a, 1b, 1c) nach einem oder mehreren der vorhergehenden Ansprüche,
**dadurch gekennzeichnet, dass** die Verstelleinrichtung (4a, 4b, 4c) zwei Antriebskörper (5a, 5b) mit entsprechenden, in Rotationsachsenrichtung gegenüberliegenden Steuernuten (7a, 7b) aufweist, die jeweils zur Aufnahme des mit dem Kopplungselement (6a, 6b, 6c) verbundenen Steuerbolzens (8) ausgebildet sind.

5. Behälterführungseinrichtung (1a, 1b, 1c) nach einem oder mehreren der vorhergehenden Ansprüche,
**dadurch gekennzeichnet, dass** der Antriebskörper (5a, 5b) mit einer sich in Rotationsachsenrichtung erstreckenden Antriebswelle (12a, 12b) verdrehfest verbunden ist.

6. Behälterführungseinrichtung (1a, 1b, 1c) nach einem oder mehreren der vorhergehenden Ansprüche,
**dadurch gekennzeichnet, dass** das Kopplungselement (6a, 6b, 6c) derart ausgebildet ist, dass es - bezogen auf die Rotationsachse - auf der dem Führungselement (3a, 3b, 3c) abgewandten Seite mit dem Antriebskörper (5a, 5b) in Eingriff befindlich ist.

7. Behälterführungseinrichtung (1a, 1b) nach einem oder mehreren der vorhergehenden Ansprüche,
**dadurch gekennzeichnet, dass** beide Führungselemente (3a, 3b, 3c) des Geländers (2) mittels jeweils einer Verstelleinrichtung (4a, 4b, 4c) quer zur Transportrichtung verlagerbar sind, wobei die Verstelleinrichtungen (4a, 4b, 4c) jeweils einen Antriebskörper (5a, 5b) aufweisen, die ein sich spiralförmig um die Rotationsachse des Antriebskörpers (5a, 5b) erstreckendes, mit dem Kopplungselement (6a, 6b, 6c) in Eingriff befindliches Steuerelement (7a, 7b) aufweisen.

8. Behälterführungseinrichtung (1a, 1b, 1c) nach einem oder mehreren der vorhergehenden Ansprüche,
**dadurch gekennzeichnet, dass** die Antriebswelle (12a, 12b) motorisch angetrieben ist.

9. Behälterführungseinrichtung (1a, 1b, 1c) nach einem oder mehreren der vorhergehenden Ansprüche,
**gekennzeichnet durch** mehrere, in Transportrichtung benachbart zueinander angeordnete Verstelleinrichtungen (4a, 4b, 4c), die über eine gemeinsame Antriebswelle (12a, 12b) miteinander verbunden sind.

10. Behälterführungseinrichtung (1b) nach einem oder mehreren der vorhergehenden Ansprüche,
**dadurch gekennzeichnet, dass** die Führungselemente (3a, 3b, 3c) einen in Transportrichtung zumindest abschnittsweise bogenförmigen Verlauf aufweisen, wobei
- eine Verstelleinrichtung (4a, 4b, 4c) mit einem in Transportrichtung ortsfest mit einem der Führungselemente (3a, 3b, 3c) verbundenen Kopplungselement (6a, 6b, 6c) und
- mindestens eine weitere Verstelleinrichtung (4a, 4b, 4c) mit einem in Transportrichtung verstellbar mit demselben Führungselement (3a, 3b, 3c) verbundenen Kopplungselement (6a ,6b, 6c)
vorgesehen ist.

11. Behälterführungseinrichtung (1a, 1b, 1c) nach einem oder mehreren der vorhergehenden Ansprüche,
**dadurch gekennzeichnet, dass** die Führungselemente (3a, 3b, 3c) zur lösbaren Aufnahme von Geländerelementen (19a, 19b) ausgebildet sind.

12. Behältertransporteinrichtung zum Transportieren von Behältern entlang einer Transportrichtung, umfassend mindestens eine Behälterführungseinrichtung (1a, 1b, 1c) nach einem oder mehreren der vorhergehenden Ansprüche.

13. Verfahren zur Einstellung des Abstandes der Führungselemente (3a, 3b, 3c) eines Geländers (2) unter Verwendung einer Behälterführungseinrichtung (1a, 1b, 1c) nach einem oder mehreren der vorhergehenden Ansprüche 1 bis 11, **gekennzeichnet durch** die folgenden Schritte:
- Verdrehung des Antriebskörpers (5a, 5b) zur Verlagerung mindestens eines Führungselements (3a, 3b, 3c) des Geländers (2) gegenüber dessen anderen Führungselement (3a, 3b, 3c) quer zur Transportrichtung und
- Beendigung der Verdrehung nach Erreichen des einzustellenden Abstandes zur Festlegung der Führungselemente (3a, 3b, 3c) zueinander.

## Claims

1. Container guiding device (1a, 1b, 1c) comprising a railing (2) with two guide elements (3a, 3b, 3c) which are mutually spaced and which extend in the transport direction of a container transport device, for guiding containers or packages, wherein at least guide element (3a, 3b, 3c) can be adjusted transversely to the transport direction relative to the other guide element (3a, 3b, 3c) by means of an adjusting device (4a, 4b, 4c), this device having a drive body (5a, 5b) which is of one piece or multiple pieces and can be rotated about a rotational axis, and a coupling element (6a, 6b, 6c) which is connected to the at least one guide element (3a, 3b, 3c), which is connected to the drive body (5a, 5b) in such a way that a rotation of the drive body (5a, 5b) produces an adjustment of the coupling element (6a, 6b, 6c) transversely to the transport direction,
**characterised in that**
the drive body (5a, 5b), which is of one piece or multiple pieces, has a control element (7a, 7b) which is in engagement with the coupling element (6a, 6b, 6c), which exhibits at least in sections a spiral-shaped path about the rotation axis of the drive body (5a, 5b), wherein
the spiral-shaped path of the control element (7a, 7b) extends in a plane perpendicular to the rotational axis.

2. Container guiding device (1a, 1b, 1c) according to claim 1,
**characterised in that** the control element is configured as a control slot (7a, 7b), which is provided for the movable reception of a control bolt (8) which is connected to the coupling element (6a, 6b, 6c).

3. Container guiding device (1a, 1b, 1c) according to claim 1 or 2,
**characterised in that** the drive body (5a, 5b) is arranged such as to rotate in a housing (9a, 9b) of the adjusting device (4a, 4b, 4c), this housing having a guide opening (11) which secures the coupling element (6a, 6b, 6c) in the circumferential direction of the drive body (5a, 5b).

4. Container guiding device (1a, 1b, 1c) according to one or more of the preceding claims,
**characterised in that** the adjusting device (4a, 4b, 4c) comprises two drive bodies (5a, 5b) with corresponding control slots (7a, 7b) arranged opposite one another in the rotational axis direction, which are each configured to receive the control bolt (8) connected to the coupling element (6a, 6b, 6c).

5. Container guiding device (1a, 1b, 1c) according to one or more of the preceding claims,
**characterised in that** the drive body (5a, 5b) is connected in a torsionally-resistant manner to a drive shaft (12a, 12b) extending in the rotational axis direction.

6. Container guiding device (1a, 1b, 1c) according to one or more of the preceding claims,
**characterised in that** the coupling element (6a, 6b, 6c) is configured in such a way that, relative to the rotational axis, it engages with the drive body (5a, 5b) on the side facing away from the guide element (3a, 3b, 3c).

7. Container guiding device (1a, 1b, 1c) according to one or more of the preceding claims,
**characterised in that** both of the guide elements (3a, 3b, 3c) of the railing (2) can be moved transversely to the transport direction in each case by means of an adjustment device (4a, 4b, 4c), wherein the adjustment devices (4a, 4b, 4c) each comprise a drive body (5a, 5b), which in turn comprise a control element (7a, 7b) extending in a spiral manner about the rotational axis of the drive body (5a, 5b) and engaging with the coupling element (6a, 6b, 6c).

8. Container guiding device (1a, 1b, 1c) according to one or more of the preceding claims,
**characterised in that** the drive shaft (12a, 12b) is driven by a motor.

9. Container guiding device (1a, 1b, 1c) according to one or more of the preceding claims,
**characterised by** a plurality of adjustment devices (4a, 4b, 4c) arranged adjacent to one another in the transport direction, which are connected to one another by means of a common drive shaft (12a, 12b).

10. Container guiding device (1b) according to one or more of the preceding claims,
**characterised in that** the guide elements (3a, 3b, 3c) exhibit a path in the transport direction which is curved at least in sections, wherein
- one adjustment device (4a, 4b, 4c) is provided with a coupling element (6a, 6b, 6c) which in the transport direction is immovably connected to one of the guide elements (3a, 3b, 3c), and
- at least one further adjustment device (4a, 4b, 4c) is provided with a coupling element (6a, 6b, 6c) which in the transport direction is adjustably connected to the same guide element (3a, 3b, 3c).

11. Container guiding device (1a, 1b, 1c) according to one or more of the preceding claims,
**characterised in that** the guide elements (3a, 3b, 3c) are configured to receive railing elements (19a, 19b) in a detachable manner.

12. Container transport device for transporting containers along a transport direction, comprising at least one container guide device (1a, 1b, 1c) according to one or more of the preceding claims.

13. Method for adjusting the distance interval between the guide elements (3a, 3b, 3c) of a railing (2), making use of a container guide device (1a, 1b, 1c) according to one or more of the preceding claims, **characterised by** the following steps:
- rotation of the drive body (5a, 5b) for moving at least one guide element (3a, 3b, 3c) of the railing (2) in relation to its other guide element (3a, 3b, 3c) transversely to the transport direction, and
- ending the rotation after reaching the distance interval which is to be adjusted in order to secure the guide elements (3a, 3b, 3c) in relation to one another.

## Revendications

1. Dispositif de guidage de contenant (1a, 1b, 1c) avec une rampe (2) avec deux éléments de guidage (3a, 3b, 3c) disposés à distance l'un de l'autre, s'étendant dans la direction de transport d'un dispositif de transport de contenant pour guider des contenants ou gerbes, dans lequel au moins un élément de guidage (3a, 3b, 3c) peut être réglé transversalement à la direction de transport par rapport à l'autre élément de guidage (3a, 3b, 3c) au moyen d'un dispositif de réglage (4a, 4b, 4c), qui présente un corps d'entraînement (5a, 5b) en une ou plusieurs parties, pouvant tourner autour d'un axe de rotation, et un élément d'accouplement (6a, 6b, 6c) relié à l'au moins un élément de guidage (3a, 3b, 3c), qui est relié au corps d'entraînement (5a, 5b) de telle sorte qu'une rotation du corps d'entraînement (5a, 5b) provoque un réglage de l'élément d'accouplement (6a, 6b, 6c) transversalement à la direction de transport,
**caractérisé en ce que**
le corps d'entraînement (5a, 5b) en une ou plusieurs parties présente un élément de commande (7a, 7b) se trouvant en prise avec l'élément d'accouplement (6a, 6b, 6c), qui présente au moins sur certaines parties un tracé en spirale autour de l'axe de rotation du corps d'entraînement (5a, 5b), dans lequel
le tracé en spirale de l'élément de commande (7a, 7b) s'étend dans un plan perpendiculairement à l'axe de rotation.

2. Dispositif de guidage de contenant (1a, 1b, 1c) selon la revendication 1, **caractérisé en ce que** l'élément de commande est réalisé en tant que rainure de commande (7a, 7b), qui est destinée à la réception déplaçable d'un boulon de commande (8) relié à l'élément d'accouplement (6a, 6b, 6c).

3. Dispositif de guidage de contenant (1a, 1b, 1c) selon la revendication 1 ou 2,
**caractérisé en ce que** le corps d'entraînement (5a, 5b) est disposé de manière à pouvoir tourner dans un boîtier (9a, 9b) du dispositif de réglage (4a, 4b, 4c), qui présente une ouverture de guidage (11) fixant l'élément d'accouplement (6a, 6b, 6c) dans la direction périphérique du corps d'entraînement (5a, 5b).

4. Dispositif de guidage de contenant (1a, 1b, 1c) selon une ou plusieurs des revendications précédentes,
**caractérisé en ce que** le dispositif de réglage (4a, 4b, 4c) présente deux corps d'entraînement (5a, 5b) avec des rainures de commande (7a, 7b) correspondantes, opposées dans la direction d'axe de rotation, qui sont réalisées respectivement pour la réception du boulon de commande (8) relié à l'élément d'accouplement (6a, 6b, 6c).

5. Dispositif de guidage de contenant (1a, 1b, 1c) selon une ou plusieurs des revendications précédentes,
**caractérisé en ce que** le corps d'entraînement (5a, 5b) est relié de manière solidaire en rotation à un arbre d'entraînement (12a, 12b) s'étendant dans la direction d'axe de rotation.

6. Dispositif de guidage de contenant (1a, 1b, 1c) selon une ou plusieurs des revendications précédentes,
**caractérisé en ce que** l'élément d'accouplement (6a, 6b, 6c) est réalisé de telle sorte que - par rapport à l'axe de rotation - il se trouve en prise avec le corps d'entraînement (5a, 5b) sur la face opposée à l'élément de guidage (3a, 3b, 3c).

7. Dispositif de guidage de contenant (1a, 1b) selon une ou plusieurs des revendications précédentes,
**caractérisé en ce que** les deux éléments de guidage (3a, 3b, 3c) de la rampe (2) sont déplaçables au moyen de respectivement un dispositif de réglage (4a, 4b, 4c) transversalement à la direction de transport, dans lequel les dispositifs de réglage (4a, 4b, 4c) présentent respectivement un corps d'entraînement (5a, 5b), qui présentent un élément de commande (7a, 7b) s'étendant en spirale autour de l'axe de rotation du corps d'entraînement (5a, 5b), se trouvant en prise avec l'élément d'accouplement (6a, 6b, 6c).

8. Dispositif de guidage de contenant (1a, 1b, 1c) selon une ou plusieurs des revendications précédentes,
**caractérisé en ce que** l'arbre d'entraînement (12a, 12b) est entraîné de manière motorisée.

9. Dispositif de guidage de contenant (1a, 1b, 1c) selon une ou plusieurs des revendications précédentes,
**caractérisé par** plusieurs dispositifs de réglage (4a, 4b, 4c) disposés au voisinage les uns des autres dans la direction de transport, qui sont reliés les uns aux autres par l'intermédiaire d'un arbre d'entraînement (12a, 12b) commun.

10. Dispositif de guidage de contenant (1b) selon une ou plusieurs des revendications précédentes,
**caractérisé en ce que** les éléments de guidage (3a, 3b, 3c) présentent un tracé arqué dans la direction de transport au moins sur certaines parties, dans lequel
- un dispositif de réglage (4a, 4b, 4c) avec un élément d'accouplement (6a, 6b, 6c) relié fixement à l'un des éléments de guidage (3a, 3b, 3c) dans la direction de transport et
- au moins un autre dispositif de réglage (4a, 4b, 4c) avec un élément d'accouplement (6a, 6b, 6c) relié au même élément de guidage (3a, 3b, 3c) de manière réglable dans la direction de transport
est prévu.

11. Dispositif de guidage de contenant (1a, 1b, 1c) selon une ou plusieurs des revendications précédentes,
**caractérisé en ce que** les éléments de guidage (3a, 3b, 3c) sont réalisés pour la réception détachable d'éléments de rampe (19a, 19b).

12. Dispositif de transport de contenant pour le transport de contenants le long d'une direction de transport, comprenant au moins un dispositif de guidage de contenant (1a, 1b, 1c) selon une ou plusieurs des revendications précédentes.

13. Procédé pour l'ajustement de la distance des éléments de guidage (3a, 3b, 3c) d'une rampe (2) au moyen d'un dispositif de guidage de contenant (1a, 1b, 1c) selon une ou plusieurs des revendications précédentes 1 à 11, **caractérisé par** les étapes suivantes :
- la rotation du corps d'entraînement (5a, 5b) pour le déplacement d'au moins d'un élément de guidage (3a, 3b, 3c) de la rampe (2) par rapport à l'autre élément de guidage (3a, 3b, 3c) de celui-ci transversalement par rapport à la direction de transport et
- l'achèvement de la rotation après l'atteinte de la distance à ajuster pour la fixation des éléments de guidage (3a, 3b, 3c) les uns aux autres.
